# EUROPEAN PATENT SPECIFICATION

(11) **EP 4 076 884 B1**
(45) Date of publication and mention of the grant of the patent: **03.07.2024**
(21) Application number: 20785528.9
(22) Date of filing: 08.10.2020
(51) Int. Cl.: B01J 2/20, B29C 48/00, B29C 48/04, B29C 48/52

(54) **GRANULATOR DEVICE WITH MAGNETIC COUPLING**
GRANULIERVORRICHTUNG MIT MAGNETKUPPLUNG
DISPOSITIF DE GRANULATION À ACCOUPLEMENT MAGNÉTIQUE

(30) Priority: 20.12.2019 EP 19218709
(43) Date of publication of application: 26.10.2022
(73) Proprietor: ANDRITZ Feed & Biofuel A/S, 6705 Esbjerg (DK)
(72) Inventor: HANSEN, Peter Christian, 6710 Esbjerg V (DK); RASMUSSEN, Sune Lynggaard, 7000 Fredericia (DK)
(74) Representative: Wirnsberger & Lerchbaum Patentanwälte OG
(86) International application number: PCT/EP2020/078246
(87) International publication number: WO 2021/121703

(56) References cited:
- DE-A1-102014 218 209
- DE-U1- 20 300 009
- GB-A- 2 017 571
- SU-A1- 250 428
- US-A- 2 605 877
- US-A1- 2006 112 805
- US-A1- 2007 003 655

## Description

The invention relates to an extruder for producing pet food having a die with at least one opening, comprising a knife which is mounted rotatably about an axis of rotation and which can be driven by a drive, in particular an electric motor, in that a torque is transmitted from the drive to the knife.

Such extruders are known from the prior art. Usually, in such an extruder an apparatus is located directly adjacent to the die on the extruder for cutting off extrudate coming out of the die, which can be embodied as a die plate. In most cases several knives are arranged on one knife head, which can rotate around the axis of rotation. The knives are driven by a motor and are usually positioned on a shaft rigidly connected to the motor. In order to ensure a high quality of the cut extrudate, it is important that a distance between the die and the knives is as small and constant as possible. The disadvantage of prior art extruders is that the distance cannot be kept constant, resulting in low product quality.

An extruder according to the preamble of claim 1 is known from US 2007/0003655 A1

The object of the invention is to specify an extruder of the type named at the outset with which an increased product quality can be achieved.

The object of the invention is attained according to the invention by an extruder according to claim 1.

As part of the invention it was recognized that prior art apparatuses often achieve poor quality of the product, because deformation of a position where the drive is mounted, for example due to increased pressure in a knife housing, can cause the common axis of rotation of the motor and knife to tilt. This results in an uneven distance between the knife and the die or the die plate during rotation. Hence, it was found that is possible to achieve a higher quality of the cut product with an apparatus according to the invention, because the drive is decoupled from the bearing of the knife. The bearing of the knife is therefore not loaded with a bending moment caused by a displacement of the drive. Thus, an internal pressure in a housing in which the drive is supported can be increased without negatively affecting product quality. Extruders are often operated under increased internal pressure to prevent the evaporation of water, which may be present in pet food, for example, during the extrusion process. Usually, the bearing element is connected directly to the die or a component adjacent to the die or a die plate, whereby the connection can also be made via a mounting plate.

Moreover, it is not necessary to align the axis of the drive exactly with the axis of the blade since the torque can be transmitted via the magnetic coupling from the drive to the knife even with small deviations between the axis of rotation of the drive and the knife.

It is advantageous if an air gap is between the drive and the knife and the torque can be transmitted via the air gap exclusively via magnetic forces. Relative movements of the drive, which are not larger than the air gap, have no effect at all on the position of the knife, especially if only a torque can be transmitted around the axis of rotation via the magnetic coupling. The air gap between the drive and the knife is usually smaller than 10 mm.

Usually, a first part of the magnetic coupling is connected to the motor in a rotationally fixed manner and a second part of the magnetic coupling is connected to the knife in a rotationally fixed manner and the two parts of the magnetic coupling are spaced apart in axial direction.

Preferably, a coupling element is provided which has a first element, which first element is rotatably connected to the bearing element and which coupling element is connected to the knife on the one hand and to the drive via the magnetic coupling on the other hand in order to transmit the torque from the drive to the knife. The apparatus can then be easily adapted to different knives or knife heads by adjusting the coupling element. Usually, the first element is connected to the bearing element via rolling bearings, so that minimum friction is guaranteed. The first element can be directly coupled to the knife or the knife head or indirectly coupled to the knife or the knife head via a second element.

Usually, the coupling element is connected to the knife in a rotationally fixed manner and to the motor via the magnetic coupling in a rotationally fixed manner. The connection of the coupling element with the knife can be, for example, a form-fit connection and/or frictionally engaged connection.

It is preferred that the coupling element has a second element, which second element is movable relative to the first element in an axial direction and is connected to the first element in a rotationally fixed way around the axis of rotation. The second element is usually rigidly connected to the knife or a knife head with several knives. The knife can then be easily adjusted to the position of the die by the axial movement of the second element relative to the first element, in order to maintain a small and even distance between the die and the knife during operation and thus ensure a high quality of the product.

The second element can also be tilted relative to the first element around an axis perpendicular to the axis of rotation with advantage. Usually, the second element is connected with the knife or can be coupled with a knife holder. The knife can then be pressed against the die or a die plate by means of the second element to achieve a minimum distance, even if the axis of rotation of the coupling element is not exactly perpendicular to a plane of the die or die plate, since such an angular error can be easily compensated by tilting the second element relative to the first element about an axis perpendicular to the axis of rotation. Usually, the second element is only connected to the first element in a rotationally fixed manner about the axis of rotation and is connected to the first element in a rotationally movable manner about all axes perpendicular to the axis of rotation in order to be able to compensate for angular errors.

The coupling element as a whole can be rotatably connected to the bearing element or it can have a contact element rigidly connected to the bearing element, to which contact element the first element is rotatably connected, for example via rolling bearings. The contact element can, for example, be designed as a sleeve which can be releasably connected to the bearing element. A ball lock pin can be provided to achieve an easily detachable connection between the contact element of the coupling element and the bearing element.

Expediently, a spring element is provided with which a preload can be applied to the knife in an axial direction in order to press the knife against the die when the apparatus is connected to the extruder. This ensures a minimum distance between the knife and the die to achieve high product quality. A thrust bearing can be provided between the die and the knife to absorb the axial force applied by the spring. The thrust bearing can, for example, be a plain bearing or a roller bearing. However, it is also possible that the axial force is transmitted to the die or a die plate by means of the knife, so that the knife is pressed against the die or die plate by means of the spring to ensure a distance of 0 mm between the knife and the die.

The spring element can also be part of the coupling element by the first element being axially movable and rotationally fixed to a second element to which the knife or the knife head is connected when the first element and the second element are coupled axially by a spring. The first element, which can be rigidly connected to the bearing element in the axial direction, then applies an axial force to the second element and thus to the knife or the knife head by means of the spring. The knife or the knives of the knife head are then pressed against the die or the die plate with the spring element, when the apparatus is mounted on an extruder.

Usually, several spring elements distributed over a circumference are arranged in the coupling element between the first element and the second element, which is axially movable relative to the first element. The second element is then pressed against the die plate via the springs and any small angular errors are simply compensated, when the apparatus is mounted on an extruder.

It is advantageous if the knife and/or the coupling element can be fixed in axial direction relative to the bearing element, in particular by means of a ball lock pin. This allows a very simple exchange of the knife and ensures a simple construction of the apparatus. The knife is preferably fixed in the axial direction to the bearing element by means of the coupling element, which can preferably be connected to the bearing element and detachably fixed in the axial direction to the bearing element by means of a ball lock pin. The coupling element together with the knife or knives can then easily be detached from the extruder.

The knife or knife head is preferably connected to the bearing element in such a way that tool-free assembly and disassembly is possible. A ball lock pin is a very easy way to embody a tool-free assembly. Of course, the knife can also be connected to the coupling element in any other way, in particular in a frictional or form-fit way.

In an extruder having a die with at least one opening through which a material can be pressed in order to form an extrudate, wherein an apparatus for cutting off the extrudate is provided in material flow direction adjoining the die which apparatus has a knife driven by a drive and rotatable about an axis of rotation, it is advantageous when the apparatus is embodied according to the invention. This allows the extrudate to be cut directly behind the die, thus achieving high product quality. The knife can be mounted on a knife head having several knives. Such an extruder can be used to produce pet food for example.

According to the invention a housing is provided that is sealed to an environment, in which housing the bearing element and the knife are located, so that the interior of the housing is subjected to a higher pressure than the environment. Usually, the interior of the housing is in fluid connection with an interior of the extruder, in particular via the openings in the die. An interior of the extruder can thus be easily pressurized to prevent water in the product from evaporating during extrusion. For example, the overpressure can be 2.5 bar. The drive, which can be embodied as an electric motor, can be supported via the housing. Since even a slight change in the position of the drive does not lead to a deterioration in quality, deformation of the housing due to increased internal pressure does not affect product quality.

According to the invention, the drive is located outside the housing and the torque is transmitted into the housing via the magnetic coupling. The drive can then be easily replaced or maintained.

It is advantageous if a linear system is provided in order to disengage the magnetic coupling. The linear system can for example be embodied as a linear drive with a motor or a manually operated spindle drive. Thus, even large magnetic forces acting between the two parts of the magnetic coupling can be easily overcome to release the coupling.

Expediently, a distance between the die and the knife is 0 mm to 0.5 mm, in particular 0.01 mm to 0.3 mm, preferably 0.2 mm. This results in a good cutting edge and thus a high product quality, whereby in particular no flakes are formed by cutting. For this purpose, the apparatus may be connected to the extruder in an appropriate manner or may be designed accordingly. A distance of 0 mm is particularly preferred. The knife then has contact with the die and slides on the die during operation. For example, the knife can be pressed against the die by means of a spring to ensure a distance of 0 mm.

Additional features, advantages and effects of the invention follow from the exemplary embodiment described below. The drawings which are thereby referenced show the following:
Fig. 1 and Fig. 2 a detail of an extruder according to the prior art in schematic illustration;
Fig. 3 and Fig. 4 an extruder according to the invention in sectional illustration;
Fig. 5 a detail of an extruder according to the invention in sectional illustration.

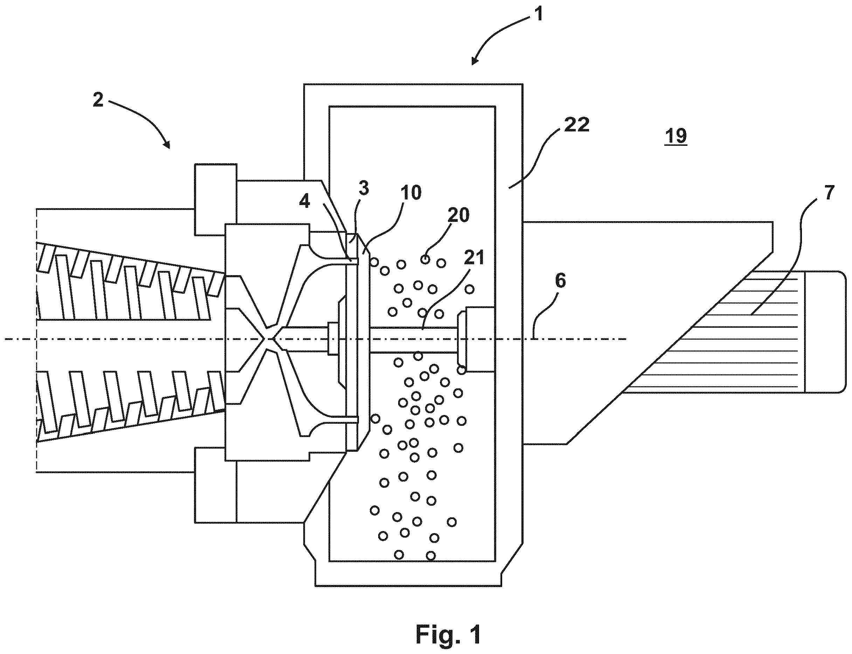

Fig. 1 shows a detail of an extruder 2 with an apparatus 1 according to the prior art. The extruder 2 is embodied as a screw extruder and comprises a die embodied as a die plate 3 with openings 4 through which fluid, semifluid or viscous material is pressed in order to build extrudate, in particular pet food. A knife head 10 with several knives 5 rotating around a axis of rotation 6 is arranged next to the die plate 3 to cut off the product 20 pressed through the openings 4. If the openings 4 are circular and a distance between the knives 5 and the die plate 3 is small, cylindrical pieces of product 20 are cut. A distance 23 between the knives 5 and the die should be as small as possible to obtain a high quality cut product 20. Preferably the distance 23 is smaller than 0.2 mm.

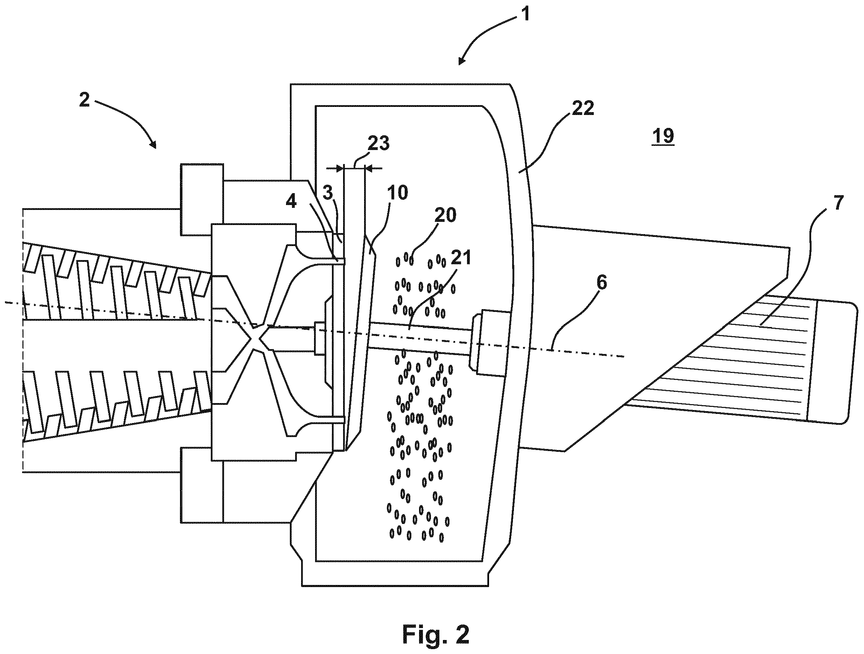

As can be seen, the knife head 10 is driven by a drive which is here embodied by an electric motor 7, whereby the motor 7 and the knife head 10 have according to the prior art a common shaft 21. The motor 7 and therefore the knife head 10 and the knives 5 are mounted in a housing 22, which hermetically separates the inside of the extruder 2 and the knives 5 from an environment 19. During operation, an internal pressure inside the housing 22 can be higher than an ambient pressure in the environment 19, for example by 2.5 bar. This pressure difference can cause a deformation of the housing 22 in the area where the motor 7 is mounted in the housing 22. This may result in tilting of the motor axis and the shaft 21 as shown in Fig. 2. This tilting will result in a larger distance 23 between the die plate 3 and the knife 5, resulting in poor quality of the product 20. As the knife 5 displaces from the die, the extruder 2 starts to create fines and flakes from the product 20, which is unacceptable. The pressure in the housing 22 is according to the prior art therefore limited to the pressure where flakes start to form.

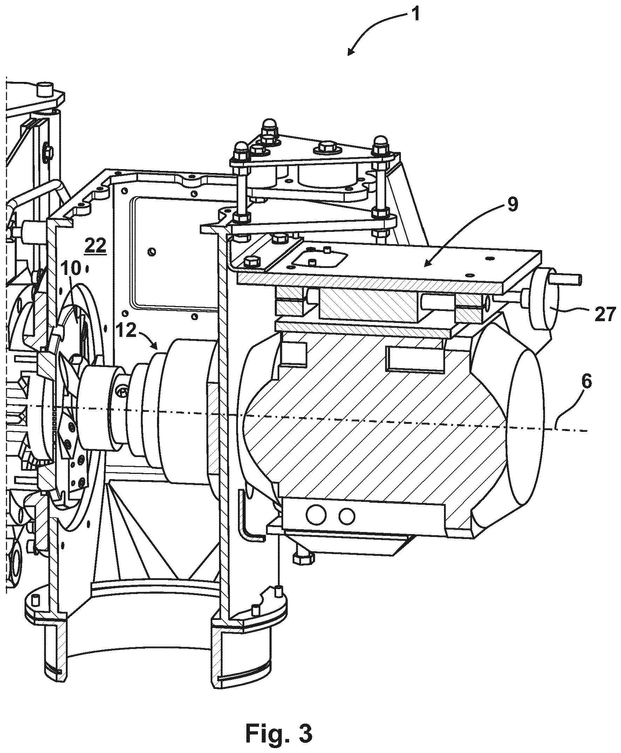

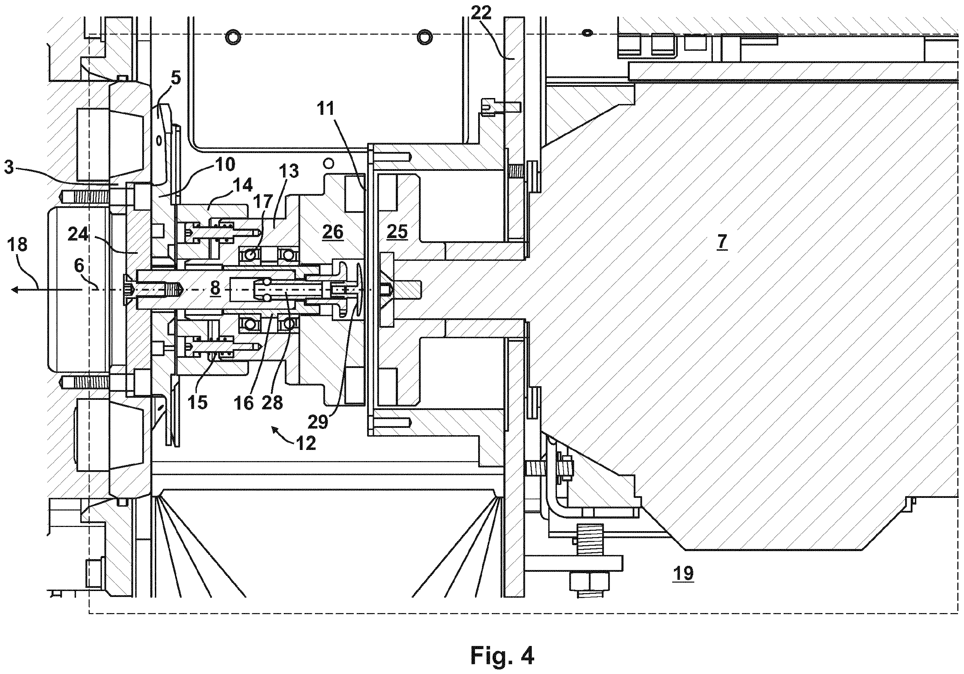

Fig. 3 and 4 show an extruder 2 with an apparatus 1 according to the invention in sectional illustration. Fig. 4 shows a sectional illustration in which the axis of rotation 6 lies in a sectional plane. As can be seen in Fig. 4, the knife head 10 with the knives 5 is not supported via the motor 7 and the housing 22, but directly attached to the die plate 3 by means of a bearing element 8. The bearing element 8 is rigidly connected to the die plate 3 or to a component adjacent to the die plate 3, in this case a mounting plate 24. The knife head 10, which carries several knives 5, is not physically connected to the motor 7. Rather, the torque is transmitted via an air gap 11 with a magnetic coupling between a first part 25 of the magnetic coupling and a second part 26 of the magnetic coupling. The first part 25 of the magnetic coupling is rotationally fixed to the motor 7 and the second part 26 of the magnetic coupling is rotationally fixed to the knife head 10. A minor change in the position of the motor 7 for example due to a deformation of the housing 22 caused by a pressure inside the housing 22 therefore does not cause a change in the position of the knives 5 or the knife head 10, in particular no tilting of the axis of rotation 6 of the knives 5. Therefore, a small distance between the knives 5 and the die plate 3 and a high product quality are ensured regardless of any deformation of the housing 22. As shown, the motor 7 is arranged outside the housing 22 and a torque to rotate the knives 5 around the axis of rotation 6 is transmitted by the motor 7 through the housing 22 without contact by means of the magnetic coupling.

A torque is transmitted between the motor 7 and the knives 5 via a coupling element 12. The coupling element 12 has a first element 13 and a second element 14, which are coupled in an axial direction 18 by spring elements 15, which are formed here by helical springs. The first element 13 is rotatably connected to the bearing element 8 at a fixed axial position and can be moved relative to the bearing element 8 only around the axis of rotation 6. For this purpose, the first element 13 is connected to the bearing element 8 via two rolling bearings 17 and a contact element. The contact element is embodied as a sleeve 16 and releasably rigidly connected to the bearing element 8 via a ball lock pin 28.

The second element 14 is movable relative to the first element 13 in the axial direction 18 and is usually connected to the first element 13 in a rotationally fixed way around the axis of rotation 6. The first element 13 and the second element 14 are therefore rotatable relative to the sleeve 16 around the axis of rotation 6. Furthermore, the knife head 10 with the knives 5 is connected to the second element 14 by means of a form fit, so that the knives 5 can be set into a rotary motion around the axis of rotation 6 by means of the second element 14. The spring elements 15 are tensioned in the position shown when the knives 5 are positioned on the die plate 3. Each knife 5 is thus pressed against the die plate 3 in the axial direction 18 with a force generated by the spring elements 15. This ensures an optimum distance 23 between the knives 5 and the die plate 3 even in the event of shaft deformation or vibrations. Thus, a contact between the knife 5 and the die plate 3 is achieved during operation. The distance 23 between knife 5 and the die plate 3 in the shown embodiment is therefore 0 mm.

As the axis of rotation 6 of the knives 5 is installed essentially perpendicular to the die plate 3, and the knives 5 operate perpendicular to the axis of rotation 6, the knives 5 will always operate parallel to the die plate 3, and therefore eliminate the need for alignment of the knife head 10 towards the die plate 3.

The motor 7 is positioned outside the housing 22. The torque is thus transmitted through the housing 22 with the magnetic coupling. A first part 25 of the magnetic coupling is connected to the motor 7 and a second part 26 of the magnetic coupling is connected to the first element 13 of the coupling element 12. The two parts 25, 26 of the magnetic coupling are thus separated in the axial direction 18, in contrast to a claw coupling, for example. Small movements of the motor 7, for example due to a deformation of the housing 22, therefore have no effect on the alignment of the knife head 10 and the knives 5 relative to the die plate 3. The housing 22 is usually formed at least in the area of the magnetic coupling by a non-magnetic material.

Since the motor 7 is located outside the housing 22, it can be easily replaced and serviced. Thus, the motor 7 can also be replaced if the pressure in the extruder 2 and in the housing 22 deviates from an ambient pressure in an environment 19. A linear system 9 is provided to release the magnetic coupling. The linear system 9 can be operated manually or by a drive. A hand crank or a handwheel 27 is preferred to operate the linear system in order to remove the motor 7 from the housing 22.

The knife head 10 is connected to the bearing element 8 via the coupling element 12 by means of a ball lock pin 28. The ball lock pin 28 can easily be released, by a push with a finger on the pusher 29. When it is released, it is easy to mount and dismount the knife head 10 by sliding the sleeve 16 onto or away from the bearing element 8. Since the knife head 10 is not secured or fastened towards the coupling element 12, it can be removed and replaced by hand once the coupling element 12 is released. The knife head 10 including the knives 5 can therefore be replaced without any need of tools.

As regards the installation procedure, the coupling element 12 is moved onto the bearing element 8, whereby the spring elements 15 are loaded. Then, the ball lock pin 28 is used to secure the loaded coupling element 12 on the bearing element 8, whereby the ball lock pin 28 is enduring the load in the spring elements 15.

However, the apparatus 1 may be designed so that the knife head 10 can first be connected to the coupling element 12 and then the coupling element 12 and the knife head 10 are together moved on the bearing element 8 in a final axial position where they are secured by the ball lock pin 28. It is also possible to first position the knife head 10 axially against the tool and then connect the coupling element 12 to the knife head 10 and the bearing element 8. So, an operator can first put the knife head 10 on the bearing element 8, then afterwards use the coupling element 12 to pressurize the knife head 10 towards the die plate 3. The coupling element 12 is then correctly secured towards the bearing element 8 by the ball lock pin 28. When dismantling, the ball lock pin 28 can be released, and the coupling element 12 dismantled and finally the knife head 10 is removed.

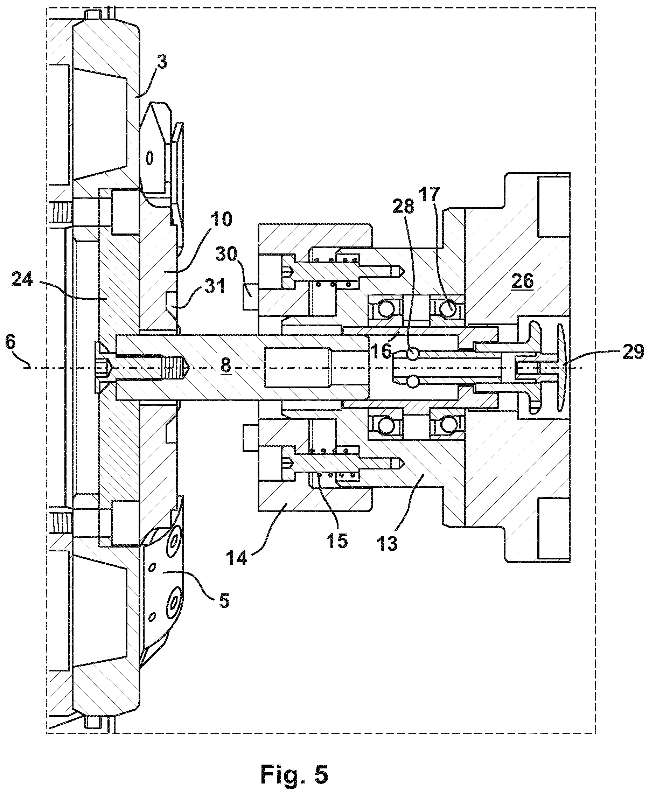

Fig. 5 shows a situation where the coupling element 12 is released from the knife head 10. As can be seen, the coupling element 12 with the first element 13 and the second element 14 as well as the sleeve 16 can be moved axially relative to the bearing element 8, for example to replace the knife head 10 or the knives 5. As can be seen, the ball lock pin 28 is also removed from the bearing element 8 in this position, since the ball lock pin 28 establishes an axial connection between the coupling element 12 and the bearing element 8 during operation. Here also pins 30 arranged on the second element 14 are visible, which during operation engage in corresponding recesses 31 in the knife head 10 in order to connect the knife head 10 positively with the coupling element 12 so that a torque can be transmitted via the coupling element 12.

With an apparatus 1 according to the invention, an exact alignment of the knives 5 relative to the die plate 3 and a constant small distance between the knives 5 and the die plate 3 is possible even if the housing 22 in which the motor 7 is mounted deforms due to a high internal pressure. A high quality product 20 can therefore be formed even at high internal pressure in the extruder 2 an in the housing 22. Furthermore, the alignment and maintenance of an extruder 2 equipped with a apparatus 1 according to the invention is very simple.

## Claims

1. An extruder (2) for producing pet food having a die with at least one opening (4) through which a material is pressable in order to form an extrudate, wherein an apparatus (1) for cutting off the extrudate is provided in material flow direction adjoining the die which apparatus has a knife (5) which is mounted rotatably about an axis of rotation (6) and which is driven by a drive, in particular an electric motor (7), in that a torque is transmitted from the drive to the knife (5), wherein a bearing element (8) is provided which is rigidly connected to the extruder (2) and via which the knife (5) is rotatably connected to the extruder (2) around the axis of rotation (6), whereby the drive is placed separately from the bearing element (8) and a magnetic coupling is provided between the bearing element (8) and the drive in order to transmit the torque from the drive to the knife (5) via magnetic forces, **characterized in that** a housing (22) is provided that is sealed to an environment (19), in which housing (22) the bearing element (8) and the knife (5) are located, so that the extruder (2) is suitable for a method in which the interior of the housing (22) is subjected to a higher pressure than the environment (19), wherein the drive is located outside the housing (22) and the magnetic coupling is configured to transmit the torque into the housing (22).

2. The extruder (2) according to claim 1, wherein an air gap (11) is between the drive and the knife (5) and the torque is transmitted via the air gap (11) exclusively via magnetic forces.

3. The extruder (2) according to claim 1 or 2, wherein a coupling element (12) is provided which has a first element (13), which first element (13) is rotatably connected to the bearing element (8) and which coupling element (12) is connected to the knife (5) on the one hand and to the drive via the magnetic coupling on the other hand in order to transmit the torque from the drive to the knife (5).

4. The extruder (2) according to claim 3, wherein the coupling element (12) has a second element (14), which second element (14) is movable relative to the first element (13) in an axial direction (18) and is connected to the first element (13) in a rotationally fixed way around the axis of rotation (6).

5. The extruder (2) according to claim 4, wherein the second element (14) is tiltable connected relative to the first element (13) around an axis perpendicular to the axis of rotation (6).

6. The extruder (2) according to any one of claims 1 to 5, wherein the knife (5) and/or the coupling element (12) is fixed in axial direction (18) relative to the bearing element (8), in particular by means of a ball lock pin (28).

7. The extruder (2) according to any one of claims 1 to 6, wherein a spring element (15) is provided with which a preload is applicable to the knife (5) in an axial direction (18) in order to press the knife (5) against the die when the apparatus (1) is connected to the extruder (2).

8. The extruder (2) according to any one of claims 1 to 7, wherein a distance (23) between the die and the knife (5) is 0 mm to 0.5 mm, in particular 0.01 mm to 0.3 mm.

9. The extruder (2) according to any one of claims 1 to 8, wherein a linear drive with a motor or a manually operated spindle drive is provided in order to disengage the magnetic coupling.

## Patentansprüche

1. Extruder (2) zum Herstellen von Tiernahrung mit einer Düse mit mindestens einer Öffnung (4), durch die ein Material drückbar ist, um ein Extrudat zu bilden, wobei in Materialflussrichtung neben der Düse eine Vorrichtung (1) zum Abschneiden des Extrudats vorgesehen ist, wobei die Vorrichtung ein Messer (5) aufweist, das um eine Drehachse (6) drehbar montiert ist und das von einem Antrieb, insbesondere einem Elektromotor (7), angetrieben wird, wobei ein Drehmoment von dem Antrieb auf das Messer (5) übertragen wird, wobei ein Lagerelement (8) vorgesehen ist, das starr mit dem Extruder (2) verbunden ist und über das das Messer (5) um die Drehachse (6) drehbar mit dem Extruder (2) verbunden ist, wodurch der Antrieb getrennt von dem Lagerelement (8) platziert ist und eine magnetische Kopplung zwischen dem Lagerelement (8) und dem Antrieb vorgesehen ist, um das Drehmoment von dem Antrieb über Magnetkräfte auf das Messer (5) zu übertragen, **dadurch gekennzeichnet, dass** ein Gehäuse (22) vorgesehen ist, das gegenüber einer Umgebung (19) abgedichtet ist, wobei sich in dem Gehäuse (22) das Lagerelement (8) und das Messer (5) befinden, so dass der Extruder (2) für ein Verfahren geeignet ist, bei dem das Innere des Gehäuses (22) einem höheren Druck als die Umgebung (19) ausgesetzt ist, wobei sich der Antrieb außerhalb des Gehäuses (22) befindet und die magnetische Kopplung eingerichtet ist, um das Drehmoment in das Gehäuse (22) zu übertragen.

2. Extruder (2) nach Anspruch 1, wobei sich zwischen dem Antrieb und dem Messer (5) ein Luftspalt (11) befindet und das Drehmoment über den Luftspalt (11) ausschließlich über Magnetkräfte übertragen wird.

3. Extruder (2) nach Anspruch 1 oder 2, wobei ein Kopplungselement (12) vorgesehen ist, das ein erstes Element (13) aufweist, wobei das erste Element (13) mit dem Lagerelement (8) drehbar verbunden ist und wobei das Kopplungselement (12) einerseits mit dem Messer (5) und andererseits mit dem Antrieb über die magnetische Kopplung verbunden ist, um das Drehmoment von dem Antrieb auf das Messer (5) zu übertragen.

4. Extruder (2) nach Anspruch 3, wobei das Kopplungselement (12) ein zweites Element (14) aufweist, das relativ zu dem ersten Element (13) in einer axialen Richtung (18) beweglich ist und mit dem ersten Element (13) in einer um die Drehachse (6) drehbar festen Weise verbunden ist.

5. Extruder (2) nach Anspruch 4, wobei das zweite Element (14) relativ zu dem ersten Element (13) um eine Achse, die senkrecht zur Drehachse (6) steht, kippbar verbunden ist.

6. Extruder (2) nach einem der Ansprüche 1 bis 5, wobei das Messer (5) und/oder das Kopplungselement (12) in axialer Richtung (18) relativ zu dem Lagerelement (8) befestigt ist, insbesondere mittels eines Kugelsperrbolzens (28) .

7. Extruder (2) nach einem der Ansprüche 1 bis 6, wobei ein Federelement (15) vorgesehen ist, mit dem eine Vorspannung auf das Messer (5) in einer axialen Richtung (18) aufbringbar ist, um das Messer (5) gegen die Düse zu drücken, wenn die Vorrichtung (1) mit dem Extruder (2) verbunden ist.

8. Extruder (2) nach einem der Ansprüche 1 bis 7, wobei ein Abstand (23) zwischen der Düse und dem Messer (5) 0 mm bis 0,5 mm, insbesondere 0,01 mm bis 0,3 mm beträgt.

9. Extruder (2) nach einem der Ansprüche 1 bis 8, wobei ein Linearantrieb mit einem Motor oder ein manuell betätigter Spindelantrieb vorgesehen ist, um einen Eingriff mit der magnetischen Kopplung zu lösen.

## Revendications

1. Extrudeuse (2) destinée à produire des aliments pour animaux, comportant une filière dotée d'au moins une ouverture (4) à travers laquelle un matériau peut être pressé pour former un extrudat, dans laquelle un appareil (1) destiné à couper l'extrudat est disposé dans une direction d'écoulement de matériau adjacente à la filière, ledit appareil comportant une lame (5) montée de façon rotative autour d'un axe de rotation (6) et entraînée par un entraînement, en particulier un moteur électrique (7), un couple étant transmis à partir de l'entraînement à la lame (5), dans laquelle il est prévu un élément de palier (8) relié de façon rigide à l'extrudeuse (2) et par le biais duquel la lame (5) est reliée de façon rotative à l'extrudeuse (2) autour de l'axe de rotation (6), moyennant quoi l'entraînement est placé séparément de l'élément de palier (8) et un accouplement magnétique est disposé entre l'élément de palier (8) et l'entraînement pour la transmission du couple à partir de l'entraînement à la lame (5) par le biais de forces magnétiques, **caractérisée en ce qu'**il est prévu un boîtier (22) scellé par rapport à un environnement (19), l'élément de palier (8) et la lame (5) se trouvant dans le boîtier (22), de telle façon que l'extrudeuse (2) est adaptée pour un procédé dans lequel l'intérieur du boîtier (22) est soumis à une pression plus élevée que l'environnement (19), dans laquelle l'entraînement se trouve à l'extérieur du boîtier (22) et l'accouplement magnétique est configuré pour transmettre le couple à l'intérieur du boîtier (22) .

2. Extrudeuse (2) selon la revendication 1, dans laquelle un espace d'air (11) se trouve entre l'entraînement et la lame (5) et le couple est transmis par le biais de l'espace d'air (11) exclusivement par des forces magnétiques.

3. Extrudeuse (2) selon la revendication 1 ou 2, dans laquelle il est prévu un élément d'accouplement (12) comportant un premier élément (13), ledit premier élément (13) est relié de façon rotative à l'élément de palier (8) et ledit élément d'accouplement (12) est relié d'une part à la lame (5) et d'autre part à l'entraînement par le biais de l'accouplement magnétique pour la transmission du couple à partir de l'entraînement à la lame (5).

4. Extrudeuse (2) selon la revendication 3, dans laquelle l'élément d'accouplement (12) comporte un deuxième élément (14), ledit deuxième élément (14) est déplaçable par rapport au premier élément (13) dans une direction axiale (18) et relié au premier élément (13) d'une manière solidaire en rotation autour de l'axe de rotation (6).

5. Extrudeuse (2) selon la revendication 4, dans laquelle le deuxième élément (14) est relié de façon inclinable par rapport au premier élément (13) autour d'un axe perpendiculaire à l'axe de rotation (6).

6. Extrudeuse (2) selon l'une quelconque des revendications 1 à 5, dans laquelle la lame (5) et/ou l'élément d'accouplement (12) est fixé(e) dans la direction axiale (18) par rapport à l'élément de palier (8), en particulier au moyen d'un pivot à bille de verrouillage (28).

7. Extrudeuse (2) selon l'une quelconque des revendications 1 à 6, dans laquelle il est prévu un élément de ressort (15) permettant d'appliquer une précharge à la lame (5) dans une direction axiale (18) afin de presser la lame (5) contre la filière lorsque l'appareil (1) est relié à l'extrudeuse (2).

8. Extrudeuse (2) selon l'une quelconque des revendications 1 à 7, dans laquelle une distance (23) entre la filière et la lame (5) mesure de 0 mm à 0,5 mm, en particulier de 0,01 mm à 0,3 mm.

9. Extrudeuse (2) selon l'une quelconque des revendications 1 à 8, dans laquelle il est prévu un entraînement linéaire doté d'un moteur ou un entraînement à broche actionné manuellement pour le désengagement de l'accouplement magnétique.
